# EUROPEAN PATENT SPECIFICATION

(11) **EP 1 517 758 B1**
(45) Date of publication and mention of the grant of the patent: **22.08.2007**
(21) Application number: 02797016.9
(22) Date of filing: 09.12.2002
(51) Int. Cl.: B07C 5/342

(54) **APPARATUS AND METHOD FOR ARRANGING PLAQUES INTO THE SAME ORIENTATION**
VORRICHTUNG UND VERFAHREN ZUM AUSRICHTEN VON PLATTEN
APPAREIL DE PRODUCTION DE PLAQUES

(30) Priority: 06.12.2001 TR 200103539
(43) Date of publication of application: 30.03.2005
(73) Proprietor: TÜBITAK Uzay Teknolojileri Arastirma Entstitüsü (TÜBITAK-UZAY), 06531 Ankara (TR)
(72) Inventor: TUNALI, Erol, Basak 1 Sitesi, B2 Blok, 06530 Ankara (TR); LELOGLU, Ugur, Murat, 06531 Ankara (TR)
(74) Representative: Cayli, Hülya
(86) International application number: PCT/TR2002/000070
(87) International publication number: WO 2003/047772

(56) References cited:
- DE-A- 19 716 468
- FR-A- 2 679 024
- US-A- 5 133 636
- US-A- 5 761 070

## Description

### Technical Field

This invention is about an apparatus that will provide composition of plaques, on a tray, the inferior and superior surfaces of which look different, and which are used as flooring and covering material, in a manner that the identical surfaces of all are above.

### Background of the invention

Within the common status of the technique, the plaques, having different inferior and superior surfaces, are put in order manually and are composed on the tray manually. Performance of this procedure manually, necessitates the work of far too much people in an ailing environment. This, in turn, creates problems in terms of location and cost. Moreover, there appear some cases in which it becomes necessary to increase or decrease the number of workers in circumstances of production that stops from time to time and then speed up.

Within the common status of the technique, in order to achieve the composition of the plaques, having different inferior and superior surfaces, in a manner that the identical surfaces of all are above, the property of the difference in shape between the front and the backside of the plaques is used. In this method, the plaques are erected on their side and vibration is applied. Later, the plaques are let to fall down in a channel. In these circumstances, as there is higher possibility for the fall of the plaques upon their identical surfaces due to their difference in shape, the plaques are composed to a certain extent, and the remaining are corrected manually. This system, on account of its structure, is applicable only to tiny plaques, stones, etc.

Within the common status of the technique, plaques' visual characteristics such as color, pattern, etc., are not utilized in the providence of the composition on a tray of the plaques, having different inferior and superior surfaces, in a manner that the identical surfaces of all are above. The visual characteristics of the plaques are utilized in grouping of the plaques only according to the quality of their brilliant surfaces.

The Japanese patent document, no. JP6207855, explains the method of grouping of the plaques, having previously determined reflection values, via the utilization of a light source and a light sensor. This method includes the steps of sending light upon each plaque on the conveyor belt, measurement of the light reflected from the plaque surface, comparison of this measured value with the previously determined value, and diversion of inappropriate plaques from the conveyor belt.

The German patent document, no. DE3515188, explains the classification of plaques on a conveyor belt according to their surface characteristics via the utilization of a testing apparatus attached to an optical measurement apparatus.

Both of the patent documents mentioned above are concerned with grouping of plaques according to their surface characteristics. However, the methods explained in these patent documents do not give information about the composition on a tray of the plaques, having different inferior and superior surfaces, in a manner that the identical surfaces of all are above.

US-A- 5,133,636 discloses a system for chip orientation, DE-A-19716468 the inspection of the sides using a single camera.

### The Aim of the Invention

The aim of this invention is the realization of an apparatus that will provide composition on a tray of plaques, the inferior and superior surfaces of which look different, and which are used as flooring and covering material, in a manner that the identical surfaces of all are above.

The plaque composing apparatus, realized to achieve the goal of this invention, is drawn in the enclosed figures, and among these figures;

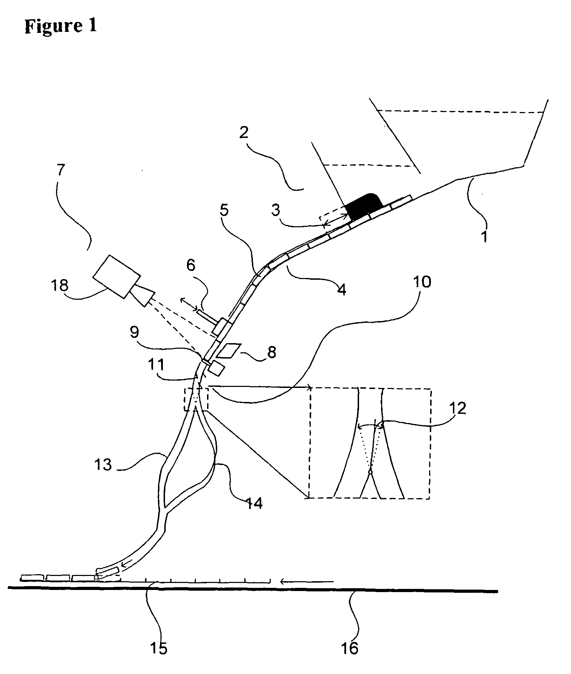

Figure 1 - The general view of the apparatus.

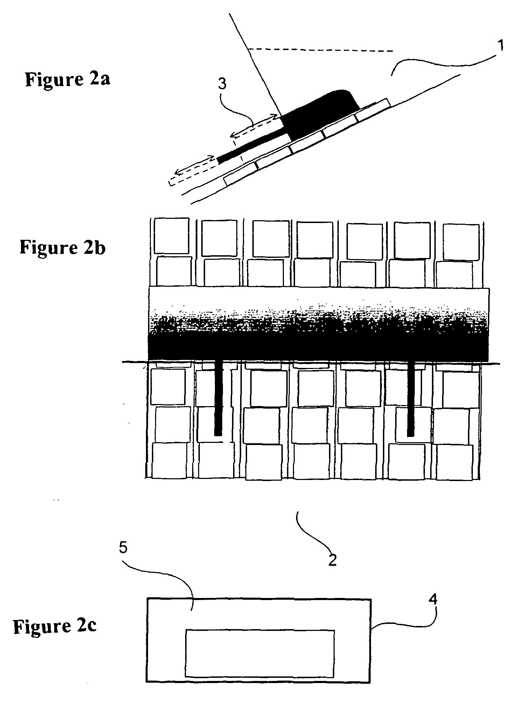

Figure 2a - The side view of the plaque taking mechanism from the magazine.
Figure 2b - The view of the channel.
Figure 2c - The view of the plaque in the channel.

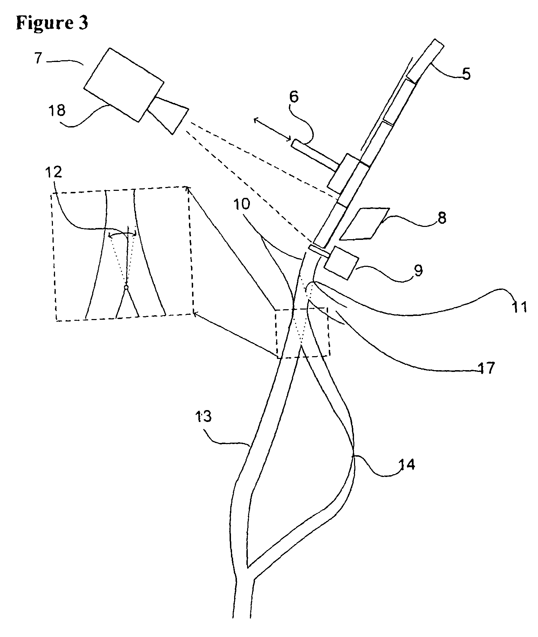

Figure 3 - The view of the plaque diversion setup, discharging channel and the turning setup.

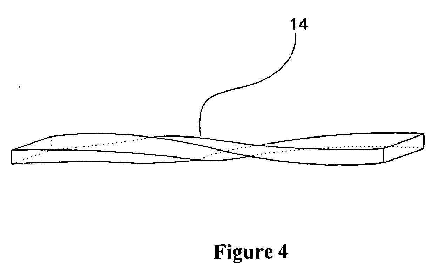

Figure 4 - The view of the plaque turning channel.
Figure 5a - The side view of the tray, and the composed plaques.
Figure 5b - The upper view of the tray, and the composed plaques.
Figure 6 - The imaging of the front and backside surfaces of plaques by a camera with the aid of a mirror or a prism.

Items in the figures are enumerated one by one, and these numbers correspond to those given below:
1- Magazine
2- Plaque Taking Mechanism
3- Plaque Broom
4- Channel
5- Plaque
6- Plaque Stopping Handle
7- Imaging and Evaluation Unit
8- Mirror
9- Plaque Stopping Gate
10- Plaque Diversion Mechanism
11- Improper Plaque Diversion Gate
12- Plaque Directing Gate
13- Straight Channel
14- Turning Channel
15-Tray
16- Belt
17- Discharging Channel
18- Camera

### Detailed Description of the Invention

The plaque composing apparatus, the subject matter of the invention, is composed of a magazine (1) in which the plaques (5) are filled, a plaque taking mechanism (2) containing a plaque broom (3) which provides the receipt of the plaques one by one from the magazine by sweeping the upper surfaces of the plaques, and channels (4) having enough width into which the received plaques can fit horizontally, a plaque stopping handle (6) and a plaque stopping gate which prevent the entrance of more than one plaques into the imaging area, an imaging and evaluation unit (7) containing an imaging camera (18), the mirror and the prism (8) which provides the imaging of the back surface of the plaque by the camera (18), a data processing hardware and software which decide whether the plaque will be turned, and which control the plaque stopping gate (9), the improper plaque diversion gate (11), the plaque directing gate (12) and the plaque stopping handle (6), a plaque diversion mechanism (10) that sends the plaque to the tray (15), if necessary after turning or without turning it, and a belt (16) which ensures the proper positioning and the movement of these trays (15) below the channels, into which appropriate plaques will fall. The belt (16), furthermore, fulfills the function of automatic taking of the trays (15) on which the plaques will be composed, and so, provides the composition of the plaques on the trays (15).

The magazine (1) is a container in which the plaques are placed, the upper part of which is wider than its lower part with respect to the vertical plane and which has an opening in its lower part wide enough to let the plaques pass through easily to the plaque taking mechanism (10).

The plaque taking mechanism (2) properly lines up the plaques (5) taken from the magazine (1) in channels (4) into which the plaques can fit horizontally. Plaques (5) cannot suit to a channel (4) side by side and one over another, but only one plaque (5) can fit into a channel (4) one over another and on its side. The top of the channels (4) is closed in order to prevent the turning of the plaques (5). In the plaque composing apparatus, there are as many channels (4) as the number of the columns on the tray (15). The channel is designed so narrow as to ensure that no more than one plaque can suit side by side or one above another, and it has a wide and slippery fabric so that the plaques (5) can easily slide in it. The channels (4) are manufactured from stainless steel with a burnished surface in order to achieve slippage and to prevent difficulties resulting from a probable rusting caused by corrosion. Another characteristic of the channels (4) is that they have a slope so as to ensure slippage. This slope will be able to alter between 20 degrees and 85 degrees according to the weight and slippage of the plaques and the material that the channels (4) are made of.

The plaque-stopping handle (6) at the lower edge of the channel moves up and down on the axis perpendicular to the basis of the channel (4) via being controlled by the imaging and evaluation unit containing the data processing hardware and software. When the plaque stopping handle (6) goes down, it stops the plaque (5) by pressing on it, and when it goes up, it provides the passage of the plaque (5) into the imaging and evaluation unit (7) by abolishing its pressure on the plaque (5). Passage of more than one plaque (5) to the imaging and evaluation unit (7) is prevented in this way. Meanwhile, the plaque-stopping gate (9) below the imaging and evaluation unit (7) is opened or closed according to the decision made by the imaging and evaluation unit containing the data processing hardware and software.

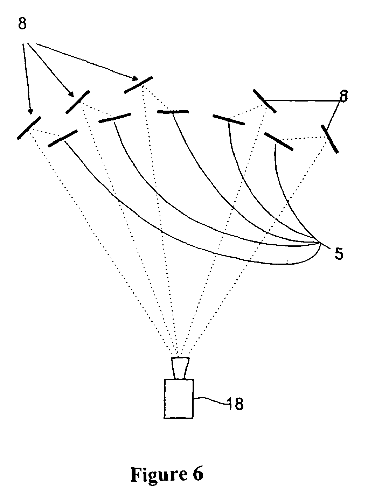

The imaging and evaluation unit (7) contains at least one camera (18) that images the below and above views of the plaque (5), a mirror and a prism (8) which are utilized in order to image the inferior surface of the plaque, and the data processing hardware and software where the images taken by the camera (18) are evaluated, and which decide whether the plaque (5) be turned or not. The mirror or the prism (8) is located, as shown in Figure 6, so as to ensure the imaging of the back surface of the plaque (5) beside the superior surface of the plaque (5) by the camera (18), if necessary with an appropriate angle with the back surface of the plaque (5) in order to ensure the imaging of the back surface. For the camera (18) to see each plaque (5) from the same angle from the back, the channels with the plaques in them (4) will be arranged, as shown in Figure 6, on a circle with the camera (18) at its center. In this way, equal distance of all side-by-side channels (4) to the camera (18) will be achieved. The radius of the mentioned circle will change according to the angle of vision of the camera (18) that is going to be used.

In the imaging and evaluation unit (7), first of all, the images pertaining to the two sides of the plaque (5) are taken by the camera (18) and these images are captured. After that, the information on the location of the plaque (5) within this image taken, that is, the image coordinates of each plaque (5) are designated. For this purpose, the camera (18) should be fixed in its place after the installation of the system, and the images of the plaques (5) should be selected manually within the images taken by the camera (18), and the image coordinates of each of these plaques' (5) image pairs, normal image and the mirror image, should be determined. These determined coordinates are used in order to find out the location of the plaques (5) within the image taken during the operation of the plaque composing apparatus. However, as the location of the plaques (5) to be composed in the channel (4) might alter, the previously determined image coordinates are used in order to find out the approximate location of the plaque (5), and the exact location of the plaque within the taken image is re-calculated by the software. In order to facilitate the task of determining the exact location of the plaque (5) within the image, the background of the place on which the plaque (5) is located is designed so as to make contrast, in terms of color and/or pattern, with the plaque. Besides, this ground is easily alterable, and in case of necessity, it is altered in order to facilitate the composition of plaques (5) having different characteristics. Another parameter found out of the calculations related to images is the mean and the variance values of the images pertaining to the characteristics such as brilliance, pattern of the inferior and superior surfaces of the imaged plaques (5) in order to find out the difference between these characteristics. After the calculation of these values, the threshold values for front and back surfaces will be determined, and comparison will be done according to these values. The imaging and evaluation unit (7), meanwhile, evaluates the dimensions and the shapes of the plaques (5), and also determines the plaques (5) outside the tolerance values given by the producer.

After the imaging and evaluation tasks of the plaque (5) are completed, the plaque-stopping gate (9) is opened and it is closed after the passage of the plaque (5). This plaque (5) passing through the plaque-stopping gate (9) reaches to the plaque diversion mechanism (10).

The plaque diversion mechanism (10) contains the improper plaque container into which the improper plaques will be sent through a discharging channel (17), an improper plaque diversion container (11), the straight channel (13) which ensures the transfer of the plaque onto the tray (15) without being turned, a turning channel (14) which provides the turning of the plaque, and a plaque direction gate (12). The plaques are directed to one of these three routes via the imaging and evaluation unit's (7) control over the plaque direction gate (12) located at the entrance of these channels, according to the decision given at the imaging and evaluation unit (7) that contains the data processing hardware and software.

If both surfaces of the plaque (5) appear to belong to the same class (front or back) in the imaging and evaluation unit (7), if the plaque's dimension is outside the standards or if the plaque is different in shape from that supposed to be; then the plaque (5) is identified as improper, and the improper plaque diversion gate (11) is opened, closing the way to other channels, and it ensures the orientation of the plaque (5) to the improper plaque container through the discharge channel (17).

The turning channel is created by the twist of the straight channel by 180 degrees around its long axis (an opened Mobious Strip) and it provides the turning of the plaque (5) upside-down. The plaque (5) passing through the turning channel is transferred to the tray (15) after being upside-down.

The plaque composing apparatus operates as follows: The plaques planned to be composed on the tray (15) are filled in the magazine (1). The plaques (5) arrive at the plaque taking mechanism (2) from the magazine (1) and they are lined up in a row in the channels (4) in the plaque taking mechanism (2). The plaque-stopping handle (6) at the edge of the channel (4) prevents the passage of the plaques (5) to the imaging and evaluation unit (7) by pressing on them. When the plaque-stopping handle (6) controlled by the imaging and evaluation unit (7) is raised, the plaques are (5) released and they pass to the imaging and evaluation unit (7). When the released plaque (5) passes to the imaging and evaluation unit (7), the plaque-stopping handle moves down to press on the next plaque (5) that takes the place of the previous plaque (5) that was transferred to the imaging and evaluation unit (7), and prevents its movement and passage to the imaging and evaluation unit (7).

The plaque (5) that is separated from the other plaques stops facing the camera (18) in the imaging and evaluation unit (7). The plaque-stopping gate (9) below the plaque (5) that came to the opposite of the camera (18) prevents the plaque (5) from slipping below. The image of the superior and the inferior surfaces of the plaque (5) are taken by the camera (18) and the decision whether it is necessary to turn the plaque (5) is made by the imaging and evaluation unit (7). After the decision is made, the plaque-stopping gate (9) below the plaque (5) is opened by the imaging and evaluation unit (7), and the plaque moves towards the plaque diversion mechanism (10). The duration of the plaque's (5) standing below the imaging and evaluation unit (7) can be adjusted according to the system's speed, the speed of the gates (9,11,12) controlling the passage of the plaques and the plaque diversion mechanism (10).

When both of the surfaces of the plaque (5) are classified as belonging to the same face (both of them as front or back) by the imaging and evaluation unit (7), if the dimension of the plaque is not standard or if the plaque (5) is different in shape from that supposed to be; then the plaque (5) is described as improper, and by opening the improper plaque diversion gate (11), the plaque (5) is passed through the discharging channel (17) into the improper plaque container. Meanwhile, the plaque (5) moves only within the channel (4) that it is in, and the tray (15) is not moved. Besides, as, on the tray (15) on which the plaques (5) are composed, only the cells at the brink of the channel(s) with improper plaque(s) are empty, in the next step, only these channel(s) (4) operate to send plaques to the tray (15), and the other parallel channels make no operation. After the plaque (5) is thrown into the improper plaque container, the plaque stopping gate (9) at the end of the imaging and evaluation unit (7) switches to the closed position, and the plaque stopping handle (6) releases the next plaque (5) letting it pass to the imaging and evaluation unit (7). For how long the plaque-stopping gate (9) will keep the plaques depends upon parameters such as the system speed, the speed of the imaging and evaluation unit (7), the slipping speed of the plaques that are in the channels (4).

While the plaque composing apparatus is transacting these processes, whether the plaques (5) are properly located into their places is controlled with the help of the camera (18) or the ultrasonic, ultraviolet, mechanical, electromagnetic detectors appropriate to the character of the plaques (5).

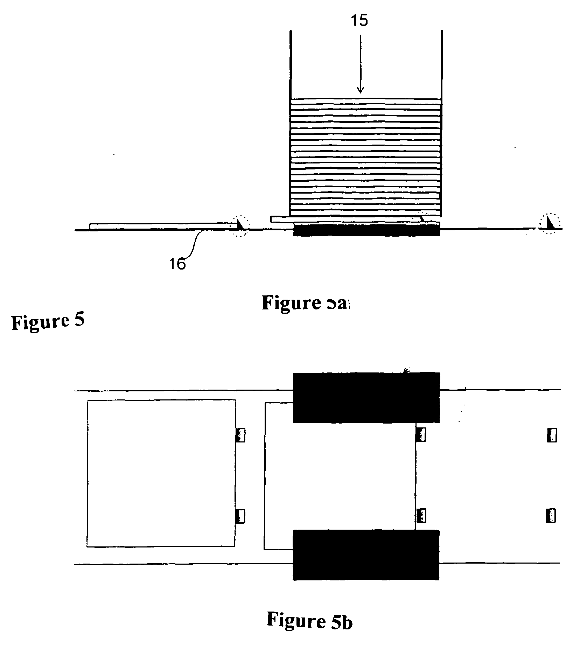

If it is decided in the imaging and evaluation unit (7) that the plaque (5) is not improper and that there is no need to turn it, then the plaque direction gate (12) at the entrance of the turning channel (14) closes down and the plaque (5) is directed towards the straight channel (13). The plaque (5) passing through the straight channel (13) seats into its place on the tray (15), as shown in Figure 5. Then, the tray (15) moves forward so as to let the next empty line of sockets take the proper position with respect to the brink of the channel (4).

If it is decided in the imaging and evaluation unit (7) that the plaque (7) is not improper but that there is need to turn it, then the plaque directing gate (12) at the entrance of the straight channel (13) closes down so that the plaque (5) is diverted towards the turning channel (14). The plaque (5) that is turned upside down in the turning channel (14) is placed on the tray (15). Then, the tray moves forward so as to let the next empty line of sockets take the proper position with respect to the brink of the channel (4).

During all these operations, the opening and closing of the plaque stopping handle (6), the plaque stopping gate (9), the improper plaque separating gate (11) and the plaque directing gate (12) are controlled by pneumatic, hydraulic, mechanical, electromechanical systems, according to the characteristics of the plaques.

## Claims

1. A plaque composing apparatus composed of a magazine (1) into which the plaques (5) are filled, a plaque broom (3) that provides the one-by-one taking of the plaques (5) from the magazine by sweeping over the plaques (5), and a plaque taking mechanism (2) containing channels (4) wide enough to contain the plaques horizontally, a plaque stopping handle (6) and a plaque stopping gate (9) that prevent the entrance of more than one plaques (5) into the scene, an imaging and evaluation unit (7) containing at least one camera (18) that performs imaging, the mirror and the prism (8) that ensure the imaging of the inferior surface of the plaque by the camera (18), the data processing hardware and software deciding whether the plaque (5) is improper or not, if not improper, whether to turn it or not, and controlling the improper plaque gate (11), the plaque stopping gate (9), the plaque directing gate (12) and the plaque stopping handle (6), a plaque diversion mechanism (10) that directs the improper plaque to the improper plaque container and sends the proper plaque, turning it or not, to the tray (15), and a conveyor belt (16) that ensures the proper positioning and movement of these trays (15) under the channels (4) into which the plaques (5) will fall.

2. A plaque composing apparatus, according to claim 1, **characterized by** a magazine (1) in which the plaques (5) are placed, the upper part of which is wider than its lower part with respect to the vertical plane and which has an opening in its lower part wide enough to let the plaques (5) pass through easily to the plaque diversion mechanism (10).

3. A plaque composing apparatus, according to claim 1 or 2, **characterized by** a plaque taking mechanism (2), containing a channel (4) that is produced narrow as to ensure that no more than one plaque (5) can fit into it side by side or one over another, and is sloppy so that the plaques (5) can slide easily in it.

4. A plaque composing apparatus, according to claim 3, **characterized by** a plaque taking mechanism (2) containing a channel (4) that is manufactured from stainless steel or a similar material with a burnished surface in order to achieve slippage and to prevent roughness resulting from a probable rusting caused by corrosion.

5. A plaque composing apparatus, according to claim 3, **characterized by** a plaque taking mechanism (2) containing a channel (4) that has a slope of approximately between 20 and 85 degrees changing according to the weight, slippage of the plaques (5) and the material that the channels (4) are made of.

6. A plaque composing apparatus, according to claims 1 to 3, **characterized by** a plaque stopping handle (6) which is at the lower edge of the channel, which is controlled by the imaging and evaluation unit (7) containing the data processing hardware and software that prevent the passage of more than one plaques (5), which moves up and down on the axis perpendicular to the basis of the channel (4), stopping the plaque (5), when it goes down, by pressing on it, and when it goes up, letting the passage of the plaque (5) into the imaging and evaluation unit (7), by abolishing its pressure on the plaque (5).

7. A plaque composing apparatus, according to claims 1 to 6, **characterized by** a plaque stopping gate (9), located below the imaging and evaluation unit (7), that is opened or closed according to the decision taken by the imaging and evaluation unit containing the data processing hardware and software.

8. A plaque composing apparatus, according to claims 1 to 7, **characterized by** an imaging and evaluation unit (7) containing at least one camera (18) that images the below and above views of the plaque (5), a mirror and a prism (8) which are utilized in order to image the inferior surface of the plaque, and the data processing hardware and software where the images taken by the camera (18) are evaluated, and which decides whether the plaques (5) are proper or not and whether the proper plaques are to be turned or not.

9. A plaque composing apparatus, according to claims 1 to 8, **characterized by** a plaque diverting mechanism (10) which contains the improper plaque container into which the improper plaques will be diverted, an improper plaque diversion gate (11), the straight channel (13) which ensures the transfer of the plaque onto the tray (15) without being turned, a turning channel (14) which provides the turning of the plaque, and a plaque direction gate (12).

10. A plaque composing apparatus, according to claim 9, **characterized by** a plaque separating mechanism (10) containing the improper plaque separating gate (11), which directs the plaques (5), described as improper by the imaging and evaluation unit (7), towards the improper plaque container by blocking the way to the straight and turning channels (13, 14).

11. A plaque composing apparatus, according to claim 9 or 10, **characterized by** a plaque diversion mechanism (10) containing a turning channel (14) which is created by the twist of the straight channel by 180 degrees around its long axis and which provides the turning of the plaque passing through it (5) upside-down.

12. A plaque composing apparatus, according to claims 1 to 7, **characterized by** a plaque diversion mechanism (10) containing the plaque directing gate (12) which directs the plaque to the straight channel (13) by closing the entrance of the turning channel (14) if it is decided by the imaging and evaluation unit (7) that the plaque (5) is not improper and that there is no need to turn it, and directs the plaque (5) to the turning channel (14) by closing the straight channel (13) if it is decided that the plaque is not improper and it is necessary to turn the plaque.

13. A plaque composing mechanism which provides the composition, on a tray, of plaques with different inferior and superior surfaces so as to have the identical surfaces above, and containing the steps of;
a. Imaging of the plaque's (5) both surfaces by the camera (18) and freezing of these images,
b. Determination of the plaque's (5) coordinates within this image,
c. Calculation of the mean and variance values of the parameters pertaining to the plaque's (5) characteristics such as brilliance, pattern,
d. After the calculation of these values, determination of the threshold values for the front and back surfaces,
e. Comparison of the threshold values with the mean and variance values,
f. After this comparison, making decision on the path that the plaque (5) will follow.

14. A plaque composing mechanism, according to claim 13, **characterized by** the decision-making on whether the plaque (5) is improper or not, and whether the proper plaques (5) will be turned or not, as a result of the comparison of the threshold values with the mean and variance values.

## Patentansprüche

1. Eine Vorrichtung zur Plattensetzung (5), die einem Plattenmagazin (1) angeordnet ist, wobei die Platten (5) durch einen Wischer (3) Stück um Stück aus dem Magazin gefördert werden, indem der Wischer die Platten (5) durchstreichen, besteht aus einem Mechanismus (2), durch dessen Kanäle (4) die horizontal gelegenen Platten (5) durchrutschen können, aus einer Kurbel (6) und einem Verschluss (9), die zusammen zur Verhinderung der Einführung von mehren Platten (5) dienen, mindestens aus einem Videoaufnahmegerät (18) und einer Einheit (7) für Evaluation und Imagination, aus einem Spiegel und einem Prisma (8), die mit Hilfe des Videoaufnahmegeräts (18) die Besichtigung unterer Fläche der Platte ermöglichen, aus einem "Hardware" und "Software", die dafür entscheiden, ob die Platten (5) geeignet sind, wonach sie wohl auch nach der Ausholung der geeigneten Platten beschließen, die Platten umzudrehen; und den Plattenabhaltungsverschluss (9), den Plattenablenkungsverschluss (12) und die Kurbel (6) steuern; aus einem Plattenumlenkungsmechanismus (10), das die ungeeigneten Platten zum Container führen, der für ungeeigneten Platten zugeordnet ist, und die Platten, die umzudrehen oder nicht umzudrehen sind, auf das Tablett (15) zuweisen, aus einem Führungsband (16), das unter die Tabletten (15) und Kanäle (4) recht angeordnet ist und dazu dient, die Platten (5) recht zu platzieren und bewegen.

2. Eine Vorrichtung zur Plattensetzung, nach Anspruch 1, **dadurch kennzeichnet, dass** ein Magazin (1), in dem die Platten (5) gelagert sind, wobei oberer Bereich der Vorrichtung im Vergleich zur vertikalen Ebene bereiter als unterer ist und einen Spielraum enthält, sodass aus dem unteren Bereich die Platten (5) leicht in das Umlenkungsmechanismus (10) durchdringen können, vorausgesehen ist.

3. Eine Vorrichtung zur Plattenabholung, nach Anspruch 1 oder 2, **dadurch kennzeichnet, dass** bei der Vorrichtung zur Plattenabholung ein Kanal (4) vorhanden ist, das so eng ist, dass es unmöglich aussieht, die Platten (5) mehr als eine nebeneinander oder aufeinander zu setzen, und ein Plattenabholungsmechanismus (2), dessen innerer Raum so beweglich ist, dass die Platten (5) leicht rutschen können, vorausgesehen sind.

4. Eine Vorrichtung zur Plattensetzung, nach Anspruch 3, **dadurch kennzeichnet, dass** dem Abholungsmechanismus ein Kanal (4) zugeordnet ist, das aus dem rostfreien Stahl oder ähnlichem Material hergestellt ist, die leichten Rutsch der Platten ermöglicht und so glatt und rutschig ausgerüstet ist, dass die Platten während des Rutsches keine Korrosion verursachen.

5. Eine Vorrichtung zur Plattensetzung, nach Anspruch 3, **dadurch kennzeichnet, dass** bei der erfindungsgemäßen Vorrichtung ein Plattenabholungsmechanismus (2), dem ein Kanal (4) zugeordnet ist, das eine nach dem Herstellungsmaterial, der Rutschfähigkeit der Oberfläche von Kanälen (4) und dem Gewicht der Platten (5) einen Unterschied zwischen 20 und 80 Grad aufweisende Führung hat, vorausgesehen ist.

6. Eine Vorrichtung zur Plattensetzung, nach Anspruch 1 oder 3, **dadurch kennzeichnet, dass** eine Plattenabhaltungskurbel (6) vorausgesehen ist, welche dem unteren Bereich vom Kanal zugeordnet ist und durch das Datenverarbeitungssystem gesteuert wird, das aus einer Einheit (7) mit einem Hardware und Software besteht, welche zur Imagination und Evaluation dienen, indem sie die Einführung mehrer Platten (5) verhindern. Wenn diese Kurbel sich vertikal zum Boden des Kanals (4) nach unten bewegt, übt sie einen Druck auf die Platte (5), wodurch die platte gestoppt wird und wenn diese Kurbel sich nach oben bewegt, wird dieser Druck aufgehoben, so dass die Platte (5) in die Einheit (7) für Imagination Evaluation geführt wird.

7. Eine Vorrichtung zur Plattensetzung, nach einem der Ansprüche 1 bis 6, **dadurch kennzeichnet, dass** ein Plattenverschluss (9), der sich auf die Entscheidung jener Vorrichtung, der ein als Datenverarbeiter funktionierender Hardware und Software zugeordnet ist, beaufschlagt oder verschließt, die unter der Einheit für Imagination und Evaluation (7) lokalisiert ist.

8. Eine Vorrichtung zur Plattensetzung, nach Anspruch 1 bis 7, **dadurch kennzeichnet, dass** die Vorrichtung mindestens aus einem Videoaufnahmegerät (18) und einer Einheit (7) für Evaluation und Imagination, aus einem Spiegel und einem Prisma (8), die mit Hilfe des Videoaufnahmegeräts (18) die Besichtigung unterer Fläche der Platte ermöglichen, aus einem "Hardware" und "Software", die dafür entscheiden, ob die Platten (5) geeignet sind, wonach sie wohl auch nach der Ausholung der geeigneten Platten beschließen, die Platten umzudrehen oder nicht.

9. Eine Vorrichtung zur Plattensetzung, nach Anspruch 1 oder 8, **dadurch kennzeichnet, dass** ein Plattenumlenkungsmechanismus (10), dem ein Magazin für ungeeignete Platten, ein Unlenkungsverschluss (11) für ungeeigneten Platten, ein gerades Kanal (13), das die Platten auf das Tablett führt, ohne sie umzuwenden, ein Kanal (14), das Umwendung der Platten ermöglicht und ein Umlenkungsverschluss (12) zugeordnet sind, vorgesehen ist.

10. Eine Vorrichtung zur Plattensetzung, nach Anspruch 9, **dadurch kennzeichnet, dass** ein Plattenabnahmemechanismus (10), dem ein Umlenkungsverschluss (11), der die ungeeigneten Platten (5) zum betroffenen Magazin führt, so zugeordnet ist, dass es auf die Anweisung der Einheit (7) für Imagination und Evaluation den Zugang in die Kanäle (13, 14) verschließt, vorgesehen ist.

11. Eine Vorrichtung zur Plattensetzung, nach Anspruch 9 oder 10, **dadurch kennzeichnet, dass** ein Umlenkungsmechanismus (10), dem ein Umwendungskanal (14) zugeordnet ist, das die in sich geführte Platten (5) auf und ab umwendet, indem es um Längsachse des geraden Kanals 180° gedreht wir, vorgesehen ist.

12. Eine Vorrichtung zur Plattensetzung, nach Anspruch 9 oder 10, **dadurch kennzeichnet, dass** ein Umlenkungsverschluss (12) vorgesehen ist, der durch die Anweisung de Einheit (7) für Imagination und Evaluation den Eingang des Umwendungskanals (14) verschließt und die Platte in gerades Kanal (13) führt, wenn die Platten (5) ungeeignet gefunden wären. Im Falle, dass die Platten (5) von der Einheit (7) für Imagination und Evaluation zur Umwendung geeignet gefunden hätten, wird der Eingang des geraden Kanals (13) verschlossen, wonach die Platten in das Umwendungskanal (14) geleitet würden.

13. Eine Vorrichtung zur Plattensetzung, die folgende Schritte beinhaltet und die Platten auf dem Tablett verordnet, um sie gleiche Flächen haben sollen, welche unterschiedliche untere und obere Flächen besitzen;
a. Aufnahme beider Flächen von Platten (5) durch ein Videoaufnahmegerät (18) und Starren der Bilder.
b. Koordinatenfeststellung der Platte (5) im Bildumfang
c. Berechnung der durchschnittlichen Parametern und der veränderlichen Werte wie Glänze und Aussehen, die sich auf die Eigenschaften der Platte beziehen.
d. Nach der Berechnung dieser Werte Bestimmung des Schwellenwerts für beide Oberflächen.
e. Vergleich zwischen Schwellenwerten und durchschnittlichen/veränderlichen Werten.
f. Nach diesem Vergleich Bestimmung der Richtung der Platte (5).

14. Eine Vorrichtung zur Plattensetzung, nach Anspruch 13, **dadurch kennzeichnet, dass** es festgestellt wird, ob die Platte (5) geeignet ist, ob die Platte (5) umgewendet werden soll, wonach der Vergleich zwischen Schwellenwerten und durchschnittlichen/veränderlichen Werten stattfindet oder nicht.

## Revendications

1. Appareil de rangement de plaques constitué d'une cuve (1) dans laquelle sont remplies les plaques (5), d'un balai de plaques (3) permettant de prendre les plaques (5) une par une en frottant sur les plaques (5) et d'un mécanisme de prise de plaques (2) comportant des canaux (4) suffisamment larges pour pouvoir contenir horizontalement les plaques, d'un bras d'arrêt (6) empêchant l'entrée de plus d'une plaque (5) et d'une porte d'arrêt de plaques (9), d'une unité de visualisation et d'analyse (7) offrant un moyen de visualisation comportant au moins une caméra (18), d'un mirroir et d'un prisme (8) permettant de visualiser la surface inférieure de la plaque grâce à la caméra (18), d'un matériel et d'un logiciel remplissant les fonctions d'une unité de traitement décidant de la conformité d'une plaque (5), décidant si elle devrait être retournée ou pas dans le cas où elle serait conforme et commandant à la porte de plaques non conformes (11), à la porte d'arrêt de plaques (9), à la porte d'orientation de plaques (12) ainsi qu'au bras d'arrêt de plaques (6), d'un mécanisme de déviation (10) dirigeant les plaques non conformes vers le conteneur de plaques non conformes et envoyant les plaques conformes vers le plateau (15) en les retournant ou en ne pas les retournant, d'une courroie porteuse (16) permettant de positionner convenablement les plateaux (15) sous les canaux (4) dans lesquelles vont basculer les plaques et permettant aux plateaux de bouger.

2. Appareil de rangement de plaques selon la revendication 1, **caractérisé par** une cuve (1) dans laquelle sont placées les plaques (5), dont la partie supérieure est plus large que la partie inférieure par rapport au plan perpendiculaire et qui possède dans la partie inférieure une grande ouverture de façon à permettre aux plaques (5) de passer facilement dans le mécanisme de déviation de plaques (10).

3. Appareil de rangement de plaques selon les revendications 1 et 2 **caractérisé par** un mécanisme de prise de plaques (2) comportant un canal (4) sufisamment étroit pour assurer que pas plus d'une plaque (5) ne s'y trouve côte à côte ou superposée, ledit canal ayant une inclinaison permettant aux plaques (5) d'y glisser aisément.

4. Appareil de rangement de plaques selon la revendication 3, **caractérisé par** un mécanisme de prise de plaques (2) comportant un canal (4) fabriqué en acier inoxydable ou à partir d'un matériau similaire présentant une surface polie de façon à assurer le glissement et à prévenir la rugosité apparue du fait d'une oxydation probable survenant en raison de la corrosion.

5. Appareil de rangement de plaques selon la revendication 3, **caractérisé par** un mécanisme de prise de plaques (2) comportant un canal (4) présentant une droite variable selon le poids, le glissement des plaques (5) et les matériaux utilisés dans la fabrication des canaux (4) et ayant une inclinaison de 20 à 85 degrés.

6. Appareil de rangement de plaques selon une des revendications 1 à 3 **caractérisé par** un bras d'arrêt de plaques (6) se trouvant sur le bord inférieur du canal, commandé par l'unité de visualisation (7) et d'analyse possédant un matériel et un logiciel remplissant les fonctions d'une unité de traitement empêchant le passage de plus d'une plaque (5), bougeant vers le haut et vers le bas sur l'axe perpendiculaire à la base du canal (4) et lorsqu'il bouge vers le bas arrêtant la plaque (5) en s'appuyant sur elle et lorsqu'il bouge vers le haut supprimant la pression appliquée à la plaque (5) et permettant ainsi le passage de la plaque (5) dans l'unité de visualisation et d'analyse (7).

7. Appareil de rangement de plaques selon l'une quelconque des revendications 1 à 6 **caractérisé par** une porte d'arrêt de plaques (9) placée sous l'unité de visualisation et d'analyse (7), s'ouvrant ou se fermant selon la décision de l'unité de visualisation et d'analyse (7) possédant un matériel et un logiciel remplissant les fonctions d'une unité de traitement.

8. Appareil de rangement de plaques selon une des revendications 1 à 7 **caractérisé par** une unité de visualisation et d'analyse (7) comportant au moins une caméra (18) visualisant les surfaces supérieures et inférieures de la plaque (5), un mirroir et un prisme (8) utilisés pour visualiser la surface interne de la plaque, ainsi qu'un matériel et un logiciel analysant les images prises par la caméra (18), décidant de la régularité des plaques (5) et décidant si les plaques doivent être retournés ou pas et remplissant les fonctions d'une unité de traitement.

9. Appareil de rangement de plaques selon une des revendications 1 à 8 **caractérisé par** un mécanisme de déviation de plaques (10) comportant un conteneur de plaques non conformes vers lequel sont dirigés les plaques non conformes, une porte de déviation des plaques non conformes (11), un canal droit (13) permettant le passage de la plaque sur le plateau (15) sans retournement, un canal de retournement (14) permettant de retourner les plaques et une porte d'orientation des plaques (12).

10. Appareil de rangement de plaques selon la revendication 9, **caractérisé par** un mécanisme de séparation de plaques (10) comportant une porte de séparation de plaques non conformes (11) dirigeant les plaques (5) jugées non conformes par l'unité de visualisation et d'analyse (7) vers le conteneur de plaques non conformes en barrant la voie donnant accès aux canaux droits et tournants (13,14).

11. Appareil de rangement de plaques selon la revendication 9 ou 10 **caractérisé par** un mécanisme de déviation de plaques (10) comportant un canal de retournement (14) formé par une rotation de 180° du canal droit autour de son axe long et permettant le retournement vers le haut ou vers le bas de la plaque (5) passant dedans.

12. Appareil de rangement de plaques selon une des revendications 1 à 7 **caractérisé par** un mécanisme de déviation de plaques (10) comportant une porte d'orientation de plaques (12) dirigeant la plaque vers l'intérieur du canal droit (13) en barrant l'entrée du canal de retournement (14) lorsque l'unité de visualisation et d'analyse (7) juge la plaque (5) conforme et décide que le retournement n'est pas nécessaire, ainsi que dirigeant la plaque (5) vers le canal de retournement (14) en fermant le canal droit (13) lorsque l'unité de visualisation et d'analyse (7) juge la plaque (5) conforme et décide qu'elle devrait être retournée.

13. Appareil de rangement de plaques permettant leur rangement sur un plateau pour que les plaques possédant des surfaces supérieures et inférieures différentes présentent les mêmes surfaces, comprenant les étapes suivantes :
a. visualisation et gel des deux surfaces de la plaque (5) à l'aide de la caméra (18),
b. détermination des coordonées de la plaque (5) à l'intérieur de l'image,
c. calcul des valeurs de la moyenne des paramètres relatifs aux caractéristiques de la plaque (5) telles que la brillance et la forme ainsi celui des valeurs des variables,
d. détermination des valeurs seuils pour les surfaces avant et arrière après calcul de ces valeurs,
e. comparaison des valeurs seuils avec la valeur moyenne et les valeurs des variables,
f. détermination du chemin que la plaque (5) va suivre, après cette comparaison.

14. Mécanisme de rangement de plaques selon la revendication 13, **caractérisé en ce que** des décisions sur la conformité de la plaque (5), sur le fait de retourner ou non les plaques (5) sont prises et par conséquent la décision de comparer les valeurs seuils avec la valeur moyenne et les valeurs des variables est prise.
